# EUROPEAN PATENT APPLICATION

(11) **EP 2 857 474 A1**
(43) Date of publication of application: **08.04.2015**
(21) Application number: 13798209.6
(22) Date of filing: 28.05.2013
(51) Int. Cl.: C09J 201/00, B32B 17/10, C09J 11/06, C09J 163/00, C09J 201/06, C09J 201/10

(54) **ADHESIVE, AND TRANSPARENT SUBSTRATE USING SAME**

(30) Priority: 29.05.2012 JP 2012121892
(71) Applicant: Nitto Denko Corporation, Ibaraki-shi, Osaka 567-8680 (JP)
(72) Inventor: HATTORI, Daisuke, Ibaraki-shi Osaka 567-8680 (JP); MURASHIGE, Takeshi, Ibaraki-shi Osaka 567-8680 (JP); KAMEYAMA, Tadayuki, Ibaraki-shi Osaka 567-8680 (JP)
(74) Representative: Hoffmann Eitle
(86) International application number: PCT/JP2013/064787
(87) International publication number: WO 2013/180133

(57) **Abstract**

There is provided an adhesive that shows excellent adhesion under high temperature even when any one of a glass and a thermoplastic resin is used as an adherend.

An adhesive according to an embodiment of the present invention is used for an adherend that includes a glass and/or a resin layer comprising a thermoplastic resin (A) , and the adhesive including:
a thermoplastic resin (b);
a thermosetting monomer (c); and
a curing catalyst,
wherein:
the thermoplastic resin (b) includes an aromatic thermoplastic resin (b1) having a glass transition temperature (Tg) of more than 200°C and/or an alicyclic thermoplastic resin (b2) having a glass transition temperature (Tg) of more than 200°C;
the thermosetting monomer (c) has compatibility with the thermoplastic resin (b); and
a content of the thermosetting monomer (c) is from 5 parts by weight to 50 parts by weight with respect to 100 parts by weight of the thermoplastic resin (b).

## Description

### Technical Field

The present invention relates to an adhesive and a transparent substrate.

### Background Art

In recent years, the weight reductions and thinning of display elements like flat panel displays (FPDs: liquid crystal display elements, organic EL display elements, and the like) have been progressing from the viewpoints of, for example, conveying property, storing property, and design, and an improvement in flexibility has also been demanded. Hitherto, glass substrates have been used as transparent substrates for use in the display elements in many cases. The glass substrates are each excellent in transparency, solvent resistance, gas barrier properties, and heat resistance. However, when one attempts to achieve the weight reduction and thinning of a glass material for forming any such glass substrate, the following problem arises. That is, the glass substrate shows some degree of, but not sufficient, flexibility and insufficient impact resistance, and hence the glass substrate becomes difficult to handle.

In order that the handleability of a thin glass substrate may be improved, a substrate in which a resin layer is formed on a glass surface has been disclosed (see, for example, Patent Literatures 1 and 2). However, such substrate does not have sufficient adhesion between its glass and resin layer, and involves a problem in terms of reliability when exposed under high temperature and high humidity in a production process or evaluation process for a display apparatus. Patent Literature 3 discloses a technology involving bonding thermoplastic resin films to each other with an adhesive containing a resin formed of substantially the same composition as that of the thermoplastic resin when covering both surfaces of a glass with the thermoplastic resin films to seal the glass. However, the adhesive of Patent Literature 3 does not have sufficient adhesion with the glass, and hence its adhesion is insufficient to bond the glass and the resin films.

### Citation List

### Patent Literature

[PTL 1] JP 11-329715 A
[PTL 2] JP 2008-107510 A
[PTL 3] JP 2007-10834 A

### Summary of Invention

### Technical Problem

The present invention has been made to solve the related-art problems, and an object of the present invention is to provide an adhesive that shows excellent adhesion under high temperature even when any one of a glass and a thermoplastic resin is used as an adherend.

### Solution to Problem

An adhesive according to an embodiment of the present invention is used for an adherend that includes a glass and/or a resin layer including a thermoplastic resin (A), and the adhesive includes:
a thermoplastic resin (b);
a thermosetting monomer (c); and
a curing catalyst,
wherein:
   the thermoplastic resin (b) includes an aromatic thermoplastic resin (b1) having a glass transition temperature (Tg) of more than 200°C and/or an alicyclic thermoplastic resin (b2) having a glass transition temperature (Tg) of more than 200°C;
   the thermosetting monomer (c) has compatibility with the thermoplastic resin (b); and
   a content of the thermosetting monomer (c) is from 5 parts by weight to 50 parts by weight with respect to 100 parts by weight of the thermoplastic resin (b).

In one embodiment of the invention, the thermoplastic resin (b) has compatibility with the thermoplastic resin (A).

In one embodiment of the invention, the thermoplastic resin (b) has a weight-average molecular weight of 18×10⁴ or less.

In one embodiment of the invention, the thermosetting monomer (c) has an epoxy group and/or an oxetanyl group.

In one embodiment of the invention, the thermosetting monomer (c) has an alkoxysilane group, a silicate group, and/or a siloxane group.

In one embodiment of the invention, a content of the curing catalyst is from 1 part by weight to 30 parts by weight with respect to 100 parts by weight of the thermosetting monomer (c).

In one embodiment of the invention, the curing catalyst includes a thermally latent curing catalyst.

In one embodiment of the invention, the curing catalyst includes an imidazole-based catalyst.

In one embodiment of the invention, the adhesive further includes a solvent capable of dissolving the thermoplastic resin (A).

In one embodiment of the invention, the solvent includes a ketone-based solvent and/or an aromatic solvent.

According to another aspect of the present invention, there is provided a transparent substrate. The transparent substrate includes:
a glass;
an adhesion layer; and
a resin layer including the thermoplastic resin (A),
wherein the adhesion layer is formed of the adhesive.

In one embodiment of the invention, the transparent substrate has a haze value of 10% or less.

According to another aspect of the present invention, there is provided a method of producing a transparent substrate. The method includes:
applying the adhesive onto a glass; and
bonding a resin film formed of a resin solution (a) onto the adhesive or applying the resin solution (a) onto the adhesive,
wherein:
   the resin solution (a) comprises the thermoplastic resin (A) and a solvent; and
   a boiling point of the solvent in the adhesive is equal to or more than a boiling point of the solvent of the resin solution (a).

### Advantageous Effects of Invention

According to one embodiment of the present invention, it is possible to provide the adhesive that contains the specific thermoplastic resin and the specific thermosetting monomer, and hence shows excellent adhesion even when any one of a glass and a thermoplastic resin is used as an adherend. In addition, the adhesive of the present invention is excellent in transparency and heat resistance.

### Brief Description of Drawings

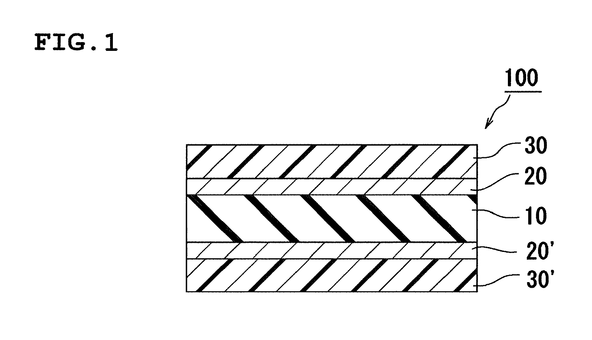

FIG. 1 is a schematic sectional view of a transparent substrate according to a preferred embodiment of the present invention.

### Description of Embodiments

An adhesive of the present invention is an adhesive to be used for an adherend that is a glass and/or a resin layer. The resin layer as the adherend contains a thermoplastic resin (A). That is, the adhesive of the present invention can be used for bonding the glass and the resin layer containing the thermoplastic resin (A). In addition, the adhesive of the present invention can be used for bonding the glasses or bonding the resin layers each containing the thermoplastic resin (A).

### A. Glass

As the glass, any appropriate glass can be adopted as long as the glass is in a plate shape. Examples of the glass include soda-lime glass, borate glass, aluminosilicate glass, and quartz glass according to the classification based on a composition. Further, according to the classification based on an alkali component, alkali-free glass and low alkali glass are exemplified. The content of an alkali metal component (e.g., Na₂O, K₂O, Li₂O) of the glass is preferably 15 wt% or less, more preferably 10 wt% or less.

As a method of forming the glass, any appropriate method can be adopted. Typically, the glass is produced by melting a mixture containing a main raw material such as silica and alumina, an antifoaming agent such as salt cake and antimony oxide, and a reducing agent such as carbon at a temperature of from 1,400°C to 1,600°C to form a thin plate, followed by cooling. Examples of the method of forming a thin plate of the glass include a slot down draw method, a fusion method, and a float method. The glass formed into a plate shape by any of those methods may be chemically polished with a solvent such as hydrofluoric acid, if required, in order to reduce the thickness and enhance smoothness.

The glass may be subjected to coupling treatment. A coupling agent to be used for the coupling treatment is exemplified by an epoxy-terminated coupling agent, an amino group-containing coupling agent, a methacrylic group-containing coupling agent, and a thiol group-containing coupling agent.

As the glass, commercially available glass may be used as it is, or commercially available glass may be polished so as to have a desired thickness. Examples of the commercially available glass include "7059," "1737," or "EAGLE 2000" each manufactured by Corning Incorporated, "AN100" manufactured by Asahi Glass Co., Ltd., "NA-35" manufactured by NH Technoglass Corporation, "OA-10" manufactured by Nippon Electric Glass Co. , Ltd. , and "D263" or "AF45" each manufactured by SCHOTT AG.

### B. Thermoplastic resin (A)

Any appropriate thermoplastic resin can be adopted as the thermoplastic resin (A) as long as the effect of the present invention is obtained. Specific examples of the thermoplastic resin include: a polyarylate-based resin; a polyethersulfone-based resin; a polycarbonate-based resin; an epoxy-based resin; an acrylic resin; a polyester-based resin such as polyethylene terephthalate or polyethylene naphthalate; a polyolefin-based resin; a cycloolefin-based resin such as a norbornene-based resin; a polyimide-based resin; a polyamide-based resin; a polyamide imide-based resin; a polysulfone-based resin; a polyether imide-based resin; and a polyurethane-based resin. Those thermoplastic resins may be used alone or in combination.

The glass transition temperature (Tg) of the thermoplastic resin (A) is preferably more than 200°C, more preferably more than 200°C and 350°C or less, still more preferably from 210°C to 330°C, particularly preferably from 230°C to 300°C. The adhesive of the present invention is useful in such an application as described below because of its excellent heat resistance: for example, a resin layer containing a thermoplastic resin having a high glass transition temperature is adopted as an adherend and a laminate after bonding (such as a transparent substrate to be described later) is exposed to a high-temperature environment (having a temperature of, for example, 200°C or more).

The weight-average molecular weight of the thermoplastic resin (A) in terms of polystyrene is preferably from 2.0×10⁴ to 150×10⁴, more preferably from 3.0×10⁴ to 120×10⁴, particularly preferably from 3.5×10⁴ to 90×10⁴. When the resin layer contains the thermoplastic resin (A) having a weight-average molecular weight within such range, the layer is excellent in compatibility with the adhesive and hence can be strongly bonded. It should be noted that the weight-average molecular weight in the description can be determined by gel permeation chromatography (GPC) measurement (solvent: tetrahydrofuran).

### C. Adhesive

The adhesive of the present invention contains a thermoplastic resin (b), a thermosetting monomer (c), and a curing catalyst.

### C-1. Thermoplastic resin (b)

An aromatic thermoplastic resin (b1) or an alicyclic thermoplastic resin (b2) is used as the thermoplastic resin (b). Of those, the aromatic thermoplastic resin (b1) is preferably used. The aromatic thermoplastic resin (b1) and the alicyclic thermoplastic resin (b2) may be used in combination. The use of such thermoplastic resin (b) can provide an adhesive excellent in adhesion and transparency.

Specific examples of the aromatic thermoplastic resin (b1) include a polyarylate-based resin, a polycarbonate-based resin, a polyphenylene ether-based resin, an aromatic polyester-based resin, a polysulfone-based resin, a polyethersulfone-based resin, a polyether ether ketone-based resin, a polyimide-based resin, a polyamide imide-based resin, a polyether imide-based resin, and a polyurethane-based resin.

The alicyclic thermoplastic resin (b2) is specifically, for example, a norbornene-based resin.

The thermoplastic resin (b) may have a hydroxyl group at a terminal thereof. The thermoplastic resin (b) having a hydroxyl group at a terminal thereof is obtained by subjecting the thermoplastic resin (b) to terminal hydroxyl group modification by any appropriate method. The thermoplastic resin (b) having a hydroxyl group at a terminal thereof and the thermoplastic resin (b) free of any hydroxyl group at a terminal thereof may be used in combination. When the thermoplastic resin (b) having a hydroxyl group at a terminal thereof is used, strong adhesion is expressed by an interaction between the thermoplastic resin (b) and the thermosetting monomer (c) (or a resin obtained by curing the thermosetting monomer).

A hydroxyl group in the thermoplastic resin (b) is preferably a phenolic hydroxyl group. This is because additionally strong adhesion can be expressed.

The thermoplastic resin (b) has compatibility with the thermosetting monomer (c). The use of the adhesive containing such thermoplastic resin (b) can provide an adhesive that provides a strong adhesive strength and is excellent in transparency.

The thermoplastic resin (b) preferably has compatibility with the thermoplastic resin (A) in the resin layer (adherend). The use of such thermoplastic resin (b) prevents the phase separation of an adhesive component and an adherend component on an adhesion surface, and hence can provide a strong adhesive strength.

The weight-average molecular weight of the thermoplastic resin (b) in terms of polystyrene is preferably 18×10⁴ or less, more preferably from 1×10⁴ to 17×10⁴, particularly preferably from 2×10⁴ to 15×10⁴. When the weight-average molecular weight of the thermoplastic resin (b) exceeds 18×10⁴, the compatibility of the adhesive with the thermoplastic resin (A) may reduce to reduce its adhesive strength.

The glass transition temperature (Tg) of the thermoplastic resin (b) is more than 200°C, preferably more than 200°C and 350°C or less, more preferably from 210°C to 330°C, particularly preferably from 230°C to 300°C. The use of the thermoplastic resin (b) having a glass transition temperature (Tg) within such range can provide an adhesive that is excellent in heat resistance and exhibits a strong adhesive strength even under a high temperature (of, for example, 200°C or more).

### C-2. Thermosetting monomer (c)

Examples of the thermosetting monomer (c) include an epoxy-based monomer, an oxetanyl-based monomer, an acrylic monomer, and a silicone-based monomer. The thermosetting monomer (c) having at least one kind of group selected from an oxetanyl group and an epoxy group is more preferably used. Specific examples of such thermosetting monomer (c) include 3-glycidoxypropyltrimethoxysilane, 2-(3,4-epoxycyclohexyl)ethyltrimethoxysilane, 3-glycidoxypropylmethyldiethoxysilane, 3-glycidoxypropyltriethoxysilane, 3-ethyl-3-hydroxymethyloxetane (oxetane alcohol), 2-ethylhexyloxetane, and xylylenebisoxetane.

The thermosetting monomer (c) may have at least one kind of group selected from an alkoxysilyl group, a silicate group, and a siloxane group. An epoxy-based monomer or oxetane-based monomer having at least one kind of group selected from an alkoxysilyl group, a silicate group, and a siloxane group is more preferably used. The use of such thermosetting monomer (c) can provide an adhesive excellent in adhesive strength.

The thermosetting monomer (c) has compatibility with the thermoplastic resin (b). The use of the adhesive containing such thermosetting monomer (c) can provide an adhesive that provides a strong adhesive strength and is excellent in transparency.

The molecular weight of the thermosetting monomer (c) is preferably 1×10⁴ or less, more preferably 5×10³ or less. When the molecular weight of the thermosetting monomer (c) falls within such range, its compatibility with the thermoplastic resin (b) is excellent and hence an adhesive excellent in transparency can be obtained.

A commercial product may be used as the thermosetting monomer (c). Examples of the commercial thermosetting monomer (c) include a product available under the trade name "KBM-403" from Shin-Etsu Chemical Co., Ltd., products available under the trade names "CELLOXIDE 2021" and "EHPE3150" from Daicel Chemical Industries, Ltd., and products available under the trade names "ARON OXETANE 221" and "OX-SQ" from TOAGOSEI CO., LTD.

The content of the thermosetting monomer (c) is from 5 parts by weight to 50 parts by weight, preferably from 10 parts by weight to 40 parts by weight, more preferably from 15 parts by weight to 37 parts by weight with respect to 100 parts by weight of the thermoplastic resin (b). When the content of the thermosetting monomer (c) with respect to 100 parts by weight of the thermoplastic resin (b) is less than 5 parts by weight, a sufficient adhesive strength may not be obtained. When the content exceeds 50 parts by weight, the adhesive may opacify.

### C-3. Curing catalyst

The curing catalyst preferably has thermal latency. In addition, the curing catalyst is preferably capable of initiating a curing reaction at a temperature of 150°C or less. Examples of the curing catalyst include an imidazole-based catalyst, a Lewis acid-based catalyst like BF₃·OEt₃, an aluminum complex-based catalyst, a triphenylphosphine-based catalyst, and a triarylsulfoniumsalt-basedcatalyst. Of those, an imidazole-based catalyst is preferred. When the imidazole-based catalyst is used, the rate of the curing reaction of the curable monomer, and the rate of compatibilization between the thermoplastic resin (A) and the adhesive can be matched with each other by a moderate activation temperature of the imidazole-based catalyst, and hence the adhesive component and the adherend component can be strongly bonded.

Specific examples of the imidazole-based catalyst include 2-methylimidazole, 1,2-dimethylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 1-benzyl-2-phenylimidazole, 1-cyanoethyl-2-methylimidazole, and 1-cyanoethyl-2-ethyl-4-methylimidazole.

The content of the curing catalyst is preferably from 1 part by weight to 30 parts by weight, more preferably from 3 parts by weight to 25 parts by weight, particularly preferably from 5 parts by weight to 20 parts by weight with respect to 100 parts by weight of the thermosetting monomer (c). When the content of the curing catalyst with respect to 100 parts by weight of the thermosetting monomer (c) exceeds 30 parts by weight, the adhesive may be colored. When the content is less than 1 part by weight, an effect of adding the curing catalyst may not be obtained.

### C-4. Other component

The adhesive may further contain a solvent. The solvent is preferably a solvent capable of dissolving the thermoplastic resin (A) in the resin layer (adherend). When such solvent is used, the adhesive permeates the resin layer (adherend) to show a strong adhesive strength. An aromatic solvent or a ketone-based solvent is preferably used as such solvent. The aromatic solvent and the ketone-based solvent may be used in combination. Specific examples of the ketone-based solvent include methyl ethyl ketone, methyl isobutyl ketone, cyclopentanone, and cyclohexanone. Specific examples of the aromatic solvent include xylene, toluene, benzene, and phenol. In addition, the solvent may be a mixed solvent of the aromatic solvent and/or the ketone-based solvent, and any other solvent.

The usage of the solvent is preferably such an amount that the viscosity of the adhesive becomes from 0.1 mPa·s to 1, 000, 000 mPa·s. The viscosity of the adhesive is more preferably from 0.2 mPa·s to 500,000 mPa·s, particularly preferably from 0.3 mPa·s to 300,000 mPa·s.

The adhesive can further contain any appropriate additive depending on purposes. Examples of the additive include a diluent, an antioxidant, a denaturant, a surfactant, a dye, a pigment, a discoloration preventing agent, a UV absorber, a softening agent, a stabilizer, a plasticizer, an antifoaming agent, and a stiffener. The kind, number, and amount of the additive to be contained in the adhesive can be set appropriately depending on purposes.

### D. Transparent substrate

The adhesive of the present invention can be suitably used in, for example, a transparent substrate for a display element because the adhesive is excellent in adhesion, heat resistance, and transparency. FIG. **1** is a schematic sectional view of a transparent substrate according to a preferred embodiment of the present invention. A transparent substrate **100** illustrated in FIG. **1** includes a glass **10,** and a resin layer 30, **30'** placed on one side, or each of both sides (preferably both sides like the illustrated example), of the glass **10** through an adhesion layer **20, 20'.** The transparent substrate can include any appropriate other layer on the side of the resin layer opposite to the inorganic glass as required, though the layer is not shown. Examples of the other layer include a transparent conductive layer and a hard coat layer. The use of the adhesive of the present invention can provide a transparent substrate excellent in transparency because the adhesive of the present invention has the following features: the adhesive itself is excellent in transparency as described above and the adhesive can suppress an influence on the transparency of the adherend.

The glass described in the section A is used as the glass 10. The thickness of the glass in the transparent substrate is preferably 80 µm or less, more preferably from 20 µm to 80 µm, particularly preferably from 30 µm to 70 µm. The transparent substrate includes the resin layer on one side, or each of both sides, of the glass, and hence a transparent substrate excellent in impact resistance can be obtained even when the thickness of the glass is reduced.

The light transmittance of the glass **10** in the transparent substrate at a wavelength of 550 nm is preferably 85% or more. The refractive index of the glass **10** at a wavelength of 550 nm is preferably from 1.4 to 1.65.

The density of the glass **10** in the transparent substrate is preferably from 2.3 g/cm³ to 3.0 g/cm³, more preferably from 2.3 g/cm³ to 2.7 g/cm³. When the density of the glass falls within the range, a lightweight transparent substrate is obtained.

The adhesion layer **20, 20'** can be formed by applying the adhesive described in the section C onto the glass 10 and then heating the adhesive. A heating temperature is preferably from 80°C to 200°C.

The thickness of the adhesion layer **20, 20'** is preferably from 0.001 µm to 20 µm, more preferably from 0.001 µm to 15 µm, particularly preferably from 0.01 µm to 10 µm. When the thickness falls within such range, the glass **10** and the resin layer **30, 30**' can be strongly bonded even under high temperature and high humidity, and a transparent substrate excellent in transparency can be obtained.

The resin layer **30, 30'** is formed of the material described in the section B. The resin layer **30, 30'** can be formed by bonding a resin film onto the glass **10** through the adhesive and then heating the film. In addition, the layer may be formed by applying a resin solution (a) onto the adhesive applied onto the glass **10** and then heating the solution.

The resin film can be obtained by, for example, applying the resin solution (a) onto any appropriate base material and then heating the solution. The resin solution (a) contains the thermoplastic resin (A) and a solvent. Any appropriate solvent can be adopted as the solvent in the resin solution (a) as long as the solvent can dissolve the thermoplastic resin (A).Examples of the solvent include: aromatic solvents such as toluene and xylene; ketone-based solvents such as cyclopentanone and methyl isobutyl ketone; ether-based solvents such as tetrahydrofuran and propylene glycol methyl ether; and halogen-based solvents such as dichloromethane and trichloroethane. Those solvents may be used alone or in combination. The base material preferably has resistance to the solvent of the resin solution (a). A material for forming such base material is exemplified by polyethylene terephthalate (PET) and polyethylene naphthalate (PEN).

The resin film may be bonded onto the glass 10 in a state where the solvent remains. The remaining solvent in the resin film can be removed by heating after the bonding (e.g., heating at the time of the formation of the adhesion layer). The amount of the remaining solvent in the resin film after the bonding and before the heating is preferably from 10 wt% to 20 wt% with respect to the total weight of the resin film.

In the production of the transparent substrate, the boiling point of the solvent in the adhesive is preferably equal to the boiling point of the solvent of the resin solution (a) or more than the boiling point of the solvent of the resin solution (a).When the boiling point of the solvent in the adhesive is equal to or more than the boiling point of the solvent of the resin solution (a), the solvent in the adhesive hardly volatilizes prior to the volatilization of the solvent of the resin solution (a) or the remaining solvent in the resin film at the time of heating after the application of the resin solution (a) or after the bonding of the resin film. As a result, foaming in the adhesion layer can be prevented.

The thickness of the resin layer **30, 30'** in the transparent substrate is preferably from 5 µm to 100 µm, more preferably from 10 µm to 80 µm, particularly preferably from 15 µm to 60 µm. When the resin layers are placed on both sides of the glass, the thicknesses of the respective resin layers maybe identical to or different from each other. The thicknesses of the respective resin layers are preferably identical to each other. Further, the respective resin layers may be formed of the same resin or resins having the same characteristics, or may be formed of different resins. The respective resin layers are preferably formed of the same resin. Therefore, the respective resin layers are most preferably formed of the same resin so as to have the same thickness. With such construction, even when the substrate is subj ected to heat treatment, a thermal stress is uniformly applied to both surfaces of the glass, and hence it becomes extremely difficult for warping or undulation to occur.

The light transmittance of the resin layer **30, 30'** in the transparent substrate at a wavelength of 550 nm is preferably 80% or more. The refractive index of the resin layer **30, 30'** at a wavelength of 550 nm is preferably from 1.3 to 1.7.

The total thickness of the transparent substrate **100** is preferably 150 µm or less, more preferably 140 µm or less, particularly preferably from 80 µm to 130 µm.

The light transmittance of the transparent substrate **100** at a wavelength of 550 nm is preferably 80% or more, more preferably 85% or more. The ratio at which the light transmittance of the transparent substrate **100** reduces after the substrate has been subjected to heat treatment at 180°C for 2 hours is preferably 5% or less. This is because of the following reason: with such reduction ratio, even when the substrate is subjected to heat treatment needed in production processes for a display element and a solar cell, the substrate can secure a practically acceptable light transmittance.

The haze value of the transparent substrate **100** is preferably 10% or less, more preferably 5% or less. When the transparent substrate having such characteristic is used in, for example, a display element, good visibility is obtained.

The transparent substrate can include any appropriate other layer on the side of the resin layer opposite to the glass as required. Examples of the other layer include a transparent conductive layer and a hard coat layer.

The transparent conductive layer can function as an electrode or an electromagnetic wave shield upon use of the transparent substrate as a substrate for a display element, (touch) input element, or solar cell.

Amaterial that can be used in the transparent conductive layer is, for example, a metal such as copper or silver, a metal oxide such as indium tin oxide (ITO) or indium zinc oxide (IZO), a conductive polymer such as polythiophene or polyaniline, or a composition containing a carbon nanotube.

The hard coat layer has a function of imparting chemical resistance, abrasion resistance, and surface smoothness to the transparent substrate.

Any appropriate material can be adopted as a material for forming the hard coat layer is formed. Examples of the material for forming the hard coat layer include epoxy-based resins, acrylic resins, silicone-based resins, and mixtures thereof. Of those, epoxy-based resins each of which is excellent in heat resistance are preferred. The hard coat layer can be obtained by curing any such resin with heat or an active energy ray.

### Examples

Hereinafter, the present invention is described specifically by way of Examples. However, the present invention is by no means limited to Examples below. It should be noted that a thickness was measured using a digital micrometer "KC-351C type" manufactured by Anritsu Corporation.

### [Production Example 1] Production of thermoplastic resin

In a reaction vessel provided with a stirring apparatus, 3.88 g (0.012 mol) of 4,4'-(1,3-dimethylbutylidene)bis(2,6-dimethylphenol), 4.18 g (0.012 mol) of 4,4'-(diphenylmethylene)bisphenol, 5.17 g (0.018 mol) of 4,4'-(1-phenylethylidene)bisphenol, 4.07 g (0.018 mol) of bisphenol A, and 0.384 g of benzyltriethylammonium chloride were dissolved in 160 g of a 1 M sodium hydroxide solution. While the solution was stirred, a solution prepared by dissolving 12.05 g (0.059 mol) of terephthaloyl chloride in 181 g of chloroform was added to the solution in one portion, followed by the stirring of the mixture at room temperature for 120 minutes. After that, the polymerization solution was left at rest and separated to separate a chloroform solution containing a polymer, and then the solution was washed with acetic acid water and washed with ion-exchanged water. After that, the washed product was loaded into methanol to precipitate the polymer. The precipitated polymer was filtered out and dried under reduced pressure to provide 23 g of a white polymer. The resultant polymer had a glass transition temperature (Tg) of 260°C and a weight-average molecular weight of 6×10⁴.

### [Production Example 2] Production of thermoplastic resin

In a reaction vessel provided with a stirring apparatus, 3. 88 g (0.012 mol) of 4,4'-(1,3-dimethylbutylidene)bis(2,6-dimethylphenol), 4.18 g (0.012 mol) of 4,4'-(diphenylmethylene)bisphenol, 5.17 g (0.018 mol) of 4,4'-(1-phenylethylidene)bisphenol, 4.07 g (0.018 mol) of bisphenol A, 0.092 g of p-t-butylphenol, and 0.384 g of benzyltriethylammonium chloride were dissolved in 160 g of a 1 M sodium hydroxide solution. While the solution was stirred, a solution prepared by dissolving 12. 05 g (0.059 mol) of terephthaloyl chloride in 181 g of chloroform was added to the solution, followed by the stirring of the mixture at room temperature for 120 minutes. After that, the polymerization solution was left at rest and separated to separate a chloroform solution containing a polymer, and then the solution was washed with acetic acid water and washed with ion-exchanged water. After that, the washed product was loaded into methanol to precipitate the polymer. The precipitated polymer was filtered out and dried under reduced pressure to provide 23 g of a white polymer. The polymer had a Tg of 260°C and a weight-average molecular weight of 5×10⁴.

### [Production Example 3] Production of thermoplastic resin

In a reaction vessel provided with a stirring apparatus, 16.1 g (0.041 mol) of 4,4'-(1-methyl-ethylidene)bis(2-cyclohexylphenol), 6.25 g (0.027 mol) of bisphenol A, 0.496 g of benzyltriethylammonium chloride, and 0.074 g of p-t-butylphenol were dissolved in 307 g of a 1 M sodium hydroxide solution. While the solution was stirred, a solution prepared by dissolving 11.1 g (0.055 mol) of terephthaloyl chloride and 2.78 g (0.014 mol) of isophthaloyl chloride in 208 g of chloroform was added to the solution in one portion, followed by the stirring of the mixture at room temperature for 120 minutes. After that, the polymerization solution was left at rest and separated to separate a chloroform solution containing a polymer, and then the solution was washed with acetic acid water and washed with ion-exchanged water. After that, the washed product was loaded into methanol to precipitate the polymer. The precipitated polymer was filtered out and dried under reduced pressure to provide 30 g of a white polymer. The resultant polymer had a glass transition temperature (Tg) of 177°C and a weight-average molecular weight of 8×10⁴.

### [Production Example 4] Production of thermoplastic resin

In a reaction vessel provided with a stirring apparatus, 7.65 g (0.028 mol) of 4,4'-(1,3-dimethylbutylidene)bisphenol, 12.35 g (0.043 mol) of 4,4'-(1-phenylethylidene)bisphenol, 0.444 g of benzyltriethylammonium chloride, and 0.022 g of p-t-butylphenol were dissolved in 185 g of a 1 M sodium hydroxide solution. While the solution was stirred, a solution prepared by dissolving 14.4 g (0.071 mol) of terephthaloyl chloride in 246 g of chloroform was added to the solution in one portion, followed by the stirring of the mixture at room temperature for 120 minutes. After that, the polymerization solution was left at rest and separated to separate a chloroform solution containing a polymer, and then the solution was washed with acetic acid water and washed with ion-exchanged water. After that, the washed product was loaded into methanol to precipitate the polymer. The precipitated polymer was filtered out and dried under reduced pressure to provide 27 g of a white polymer. The resultant polymer had a glass transition temperature (Tg) of 275°C and a weight-average molecular weight of 20×10⁴.

### [Example 1]

### (Preparation of adhesive)

10 Grams of the white polymer obtained in Production Example 1 as the thermoplastic resin (b), 0.6 g of 3-ethyl-3(((3-ethyloxetan-3-yl)methoxy)methyl)oxetane (manufactured by TOAGOSEI CO., LTD., trade name: "ARON OXETANE OXT-221") and 2.5 g of an epoxy group-terminated coupling agent (manufactured by Shin-Etsu Chemical Co., Ltd., trade name: "KBM-403") as the thermosetting monomers (c), and 0.4 g of 1,2-dimethylimidazole and 0.05 g of dibutyltin dilaurate as curing catalysts were dissolved in 30 g of cyclopentanone to provide an adhesive.

### (Glass)

One surface of a glass measuring 50 µm thick by 10 cm long by 4 cm wide was washed with methyl ethyl ketone, and then subjected to corona treatment and subsequently to coupling treatment with an epoxy group-terminated coupling agent (manufactured by Shin-Etsu Chemical Co., Ltd., trade name: "KBM-403"). The other surface of the glass was subjected to the same treatments.

### (Resin film (resin layer))

A solution of the white polymer obtained in Production Example 4 in cyclopentanone (concentration: 9 wt%) was applied onto a polyethylene terephthalate (PET) film (manufactured by Toray Industries, Inc., trade name: "LUMIRROR") to provide a resin film having a thickness of 27 µm and a remaining solvent amount of 13 wt% on the PET film.

### (Production of transparent substrate)

The resin film on the PET film was bonded to the glass through the adhesive to provide a laminate. The laminate was heated at 90°C for 4 minutes, at 130°C for 4 minutes, and at 150°C for 4 minutes. Next, the PET was peeled and the remainder was further heated at 150°C for 12 minutes to provide a transparent substrate (glass (thickness: 50µm)/adhesion layer (thickness: 1 µm on one side)/resin layer (thickness: 27 µm on one side)).

### [Example 2]

A transparent substrate was obtained in the same manner as in Example 1 except that in the preparation of the adhesive, the compounding amount of 3-ethyl-3(((3-ethyloxetan-3-yl)methoxy)methyl)oxetane (manufactured by TOAGOSEI CO., LTD., trade name: "ARON OXETANE OXT-221") was changed to 0.8 g, and the compounding amount of the epoxy group-terminated coupling agent (manufactured by Shin-Etsu Chemical Co., Ltd., trade name: "KBM-403") was changed to 3 g.

### [Example 3]

### (Preparation of adhesive)

0.3 Gram of 3-ethyl-3(((3-ethyloxetan-3-yl)methoxy)methyl)oxetane (manufactured by TOAGOSEI CO., LTD., trade name: "ARON OXETANE OXT-221") and 2.0 g of an epoxy group-terminated coupling agent (manufactured by Shin-Etsu Chemical Co., Ltd., trade name: "KBM-403") as the thermosetting monomers (c), and 0.15 g of 1,2-dimethylimidazole and 0.2 g of dibutyltin dilaurate as curing catalysts were mixed in a solution of 10 g of polyarylate (manufactured by UNITIKA LTD., trade name: "M-4000," weight-average molecular weight: 5×10⁴) as the thermoplastic resin (b) in cyclopentanone (concentration: 21 wt%) to provide an adhesive.

### (Glass)

One surface of a glass measuring 50 µm thick by 10 cm long by 4 cm wide was washed with methyl ethyl ketone, and then subjected to corona treatment and subsequently to coupling treatment with an epoxy group-terminated coupling agent (manufactured by Shin-Etsu Chemical Co., Ltd., trade name: "KBM-403"). The other surface of the glass was subjected to the same treatments.

### (Resin film (resin layer))

A solution of the white polymer obtained in Production Example 4 in cyclopentanone (concentration: 9 wt%) was applied onto a polyethylene terephthalate (PET) film (manufactured by Toray Industries, Inc., trade name: "LUMIRROR") to provide a resin film having a thickness of 27 µm and a remaining solvent amount of 13 wt% on the PET.

### (Production of transparent substrate)

The resin film on the PET film was bonded to the glass through the adhesive to provide a laminate. The laminate was heated at 90°C for 4 minutes, at 130°C for 4 minutes, and at 150°C for 4 minutes. Next, the PET was peeled and the remainder was further heated at 150°C for 12 minutes to provide a transparent substrate (glass (thickness: 50 µm) /adhesion layer (thickness: 1 µm on one side)/resin layer (thickness: 27 µm on one side)).

### [Example 4]

A transparent substrate was obtained in the same manner as in Example 1 except that in the preparation of the adhesive, the white polymer obtained in Production Example 2 was used as the thermoplastic resin (b) instead of the white polymer obtained in Production Example 1.

### [Example 5]

A solution of polyarylate (manufactured by UNITIKA LTD. , trade name: "U-100," glass transition temperature (Tg): 193°C) in cyclopentanone (concentration: 5 wt%) was applied onto a polyethylene terephthalate (PET) film (manufactured by Toray Industries, Inc., trade name: "LUMIRROR") to provide a resin film having a thickness of 27 µm and a remaining solvent amount of 13 wt% on the PET.

A transparent substrate was obtained in the same manner as in Example 1 except that a resin layer was formed of the resin film.

### [Example 6]

A solution of polycarbonate (manufactured by Bayer Material Science, trade name: "APEC 1895, "glass transition temperature (Tg) : 182°C) in cyclopentanone (concentration: 5 wt%) was applied onto a polyethylene terephthalate (PET) film (manufactured by Toray Industries, Inc., trade name: "LUMIRROR") to provide a resin film having a thickness of 27 µm and a remaining solvent amount of 13 wt% on the PET.

A transparent substrate was obtained in the same manner as in Example 1 except that a resin layer was formed of the resin film.

### [Example 7]

A transparent substrate was obtained in the same manner as in Example 1 except that in the preparation of the adhesive, the compounding amount of 3-ethyl-3(((3-ethyloxetan-3-yl)methoxy)methyl)oxetane (manufactured by TOAGOSEI CO., LTD., trade name: "ARON OXETANE OXT-221") was changed to 1 g, and the compounding amount of the epoxy group-terminated coupling agent (manufactured by Shin-Etsu Chemical Co., Ltd., trade name: "KBM-403") was changed to 3.5 g.

### [Comparative Example 1]

A transparent substrate was obtained in the same manner as in Example 1 except that in the preparation of the adhesive, the white polymer obtained in Production Example 3 was used as the thermoplastic resin (b) instead of the white polymer obtained in Production Example 1.

### [Comparative Example 2]

A transparent substrate was obtained in the same manner as in Example 1 except that in the production of the resin film (resin layer), the white polymer obtained in Production Example 3 was used instead of the white polymer obtained in Production Example 4.

### [Comparative Example 3]

A transparent substrate was obtained in the same manner as in Example 1 except that in the preparation of the adhesive, no curing catalyst was used.

### [Comparative Example 4]

A transparent substrate was obtained in the same manner as in Example 1 except that in the preparation of the adhesive, a silicone resin (manufactured by ADEKA CORPORATION, trade name: "FX-V5707") was used instead of the epoxy group-terminated coupling agent (manufactured by Shin-Etsu Chemical Co., Ltd., trade name: "KBM-403"). The thermoplastic resin (b) (white polymer obtained in Production Example 1) did not have any compatibility with the silicone resin.

### [Comparative Example 5]

A transparent substrate was obtained in the same manner as in Example 1 except that in the preparation of the adhesive, poly(diisopropyl fumarate) was used as the thermoplastic resin (b) instead of the white polymer obtained in Production Example 1.

### [Comparative Example 6]

A transparent substrate was obtained in the same manner as in Example 1 except that in the preparation of the adhesive, no thermosetting monomer (c) and no curing catalyst were used.

### [Comparative Example 7]

A transparent substrate was obtained in the same manner as in Example 1 except that in the preparation of the adhesive, no thermoplastic resin (b) was used.

### [Comparative Example 8]

A transparent substrate was obtained in the same manner as in Example 1 except that in the preparation of the adhesive, 3 g of an acrylic monomer (manufactured by Hitachi Chemical Co., Ltd. , trade name: "FANCRYL FA-513M") were used instead of 0.6 g of 3-ethyl-3(((3-ethyloxetan-3-yl)methoxy)methyl)oxetane (manufactured by TOAGOSEI CO., LTD., trade name: "ARON OXETANE OXT-221") and 2.5 g of the epoxy group-terminated coupling agent (manufactured by Shin-Etsu Chemical Co., Ltd., trade name: "KBM-403").

The thermoplastic resin (b) (white polymer obtained in Production Example 1) did not have any compatibility with the acrylic monomer. Inaddition, theacrylicmonomerdidnothaveanyreactivity with the epoxy coupling agent on the glass surface.

### [Comparative Example 9]

A transparent substrate was obtained in the same manner as in Comparative Example 8 except that an acryl-terminated coupling agent (manufactured by Shin-Etsu Chemical Co., Ltd., trade name: "KBM-5103") was used as an acrylic monomer.

### [Comparative Example 10]

A transparent substrate was obtained in the same manner as in Example 1 except that in the preparation of the adhesive, an acryl-terminated coupling agent (manufactured by Shin-Etsu Chemical Co., Ltd., trade name: "KBM-5103") was used instead of 0.6 g of 3-ethyl-3(((3-ethyloxetan-3-yl)methoxy)methyl)oxetane (manufactured by TOAGOSEI CO., LTD., trade name: "ARON OXETANE OXT-221") and 2.5 g of the epoxy group-terminated coupling agent (manufactured by Shin-Etsu Chemical Co., Ltd., trade name: "KBM-403"), and in the coupling treatment of the glass, an acrylic coupling agent (manufactured by Shin-Etsu Chemical Co., Ltd., trade name: "KBM-5103") was used instead of the epoxy group-terminated coupling agent (manufactured by Shin-Etsu Chemical Co., Ltd., trade name: "KBM-403").

### [Reference Example 1]

A transparent substrate was obtained in the same manner as in Example 1 except that in the preparation of the adhesive, toluene was used instead of cyclopentanone. Foaming was observed in the adhesion layer of the resultant transparent substrate.

### <Evaluation>

The transparent substrates obtained in the foregoing were evaluated by the following methods. Table 1 shows the results.

### (1) Adhesion test

An evaluation was performed by the cross-cut peeling test of JIS K 5400. That is, cuts were made in a 10-mm square on the surface of one outermost layer of each of the resultant transparent substrates at an interval of 1 mm with a cutter to produce 100 cross cuts, and a pressure-sensitive adhesive tape was attached onto the cross cuts. After that, the tape was peeled and adhesiveness was evaluated on the basis of the number of the cross cuts of the resin layer that had peeled from the glass. In Table 1, the case where the number of the peeled cross cuts was 0 was evaluated as Symbol "⊚" (note that: the symbol means excellent), the case where the number was from 1 to 20 was evaluated as Symbol "○" (good), and the case where the number was more than 20 was evaluated as Symbol "x".

### (2) Transparency

The transparency of each of the resultant transparent substrates was visually observed.

### (3) Heat resistance

A crack having a length of 5 mm was made in each of the resultant transparent substrates. The transparent substrate in which the crack had been made was wound around a cylindrical body having a diameter of 6 inches and left to stand under 200°C for 1 hour. At this time, the direction of the crack was set to the lengthwise direction of the cylindrical body. The development of the crack after 1 hour of the standing was visually observed. In Table 1, the case where the crack did not develop was evaluated as Symbol "○" and the case where the crack developed was evaluated as as Symbol "×".

**[Table 1]**

| | Adhesion | Transparency | Heat resistance |
|---|---|---|---|
| Example 1 | ⊚ | Transparent | ○ |
| Example 2 | ⊚ | Slightly opaque (no problem in practical use) | ○ |
| Example 3 | ⊚ | Transparent | ○ |
| Example 4 | ○ | Transparent | ○ |
| Example 5 | ○ | Transparent | ○ |
| Example 6 | ○ | Transparent | ○ |
| Example 7 | ○ | Transparent | - |
| Comparative Example 1 | ○ | Transparent | × |
| Comparative Example 2 | × | Transparent | × |
| Comparative Example 3 | × | - | - |
| Comparative Example 4 | × | Opaque | - |
| Comparative Example 5 | × | Opaque | - |
| Comparative Example 6 | × | - | - |
| Comparative Example 7 | × | - | - |
| Comparative Example 8 | × | - | - |
| Comparative Example 9 | × | - | - |
| Comparative Example 10 | × | - | - |

As is apparent from Table 1, according to the present invention, there can be obtained an adhesive excellent in adhesion, transparency, and heat resistance.

### Industrial Applicability

The transparent substrate of the present invention can find use in a wide variety of applications including display elements such as a liquid crystal display, an organic EL display, and a plasma display, solar cells, and lighting elements.

### Reference Signs List

- **10**: glass
- **20, 20'**: adhesion layer
- **30, 30'**: resin layer
- **100**: transparent substrate

## Claims

1. An adhesive to be used for an adherend that comprises a glass and/or a resin layer comprising a thermoplastic resin (A), the adhesive comprising:
a thermoplastic resin (b);
a thermosetting monomer (c); and
a curing catalyst,
wherein:
the thermoplastic resin (b) comprises an aromatic thermoplastic resin (b1) having a glass transition temperature (Tg) of more than 200°C and/or an alicyclic thermoplastic resin (b2) having a glass transition temperature (Tg) of more than 200°C;
the thermosetting monomer (c) has compatibility with the thermoplastic resin (b); and
a content of the thermosetting monomer (c) is from 5 parts by weight to 50 parts by weight with respect to 100 parts by weight of the thermoplastic resin (b).

2. An adhesive according to claim 1, wherein the thermoplastic resin (b) has compatibility with the thermoplastic resin (A).

3. An adhesive according to claim 1 or 2, wherein the thermoplastic resin (b) has a weight-average molecular weight of 18×10⁴ or less.

4. An adhesive according to any one of claims 1 to 3, wherein the thermosetting monomer (c) has an epoxy group and/or an oxetanyl group.

5. An adhesive according to any one of claims 1 to 4, wherein the thermosetting monomer (c) has an alkoxysilane group, a silicate group, and/or a siloxane group.

6. An adhesive according to any one of claims 1 to 5, wherein a content of the curing catalyst is from 1 part by weight to 30 parts by weight with respect to 100 parts by weight of the thermosetting monomer (c).

7. An adhesive according to any one of claims 1 to 6, wherein the curing catalyst comprises a thermally latent curing catalyst.

8. An adhesive according to claim 7, wherein the curing catalyst comprises an imidazole-based catalyst.

9. An adhesive according to any one of claims 1 to 8, further comprising a solvent capable of dissolving the thermoplastic resin (A).

10. An adhesive according to claim 9, wherein the solvent comprises a ketone-based solvent and/or an aromatic solvent.

11. A transparent substrate, comprising:
a glass;
an adhesion layer; and
a resin layer comprising the thermoplastic resin (A),
wherein the adhesion layer is formed of the adhesive according to any one of claims 1 to 10.

12. A transparent substrate according to claim 11, wherein the transparent substrate has a haze value of 10% or less.

13. A method of producing a transparent substrate, the method comprising:
applying the adhesive according to claim 9 or 10 onto a glass; and
bonding a resin film formed of a resin solution (a) onto the adhesive or applying the resin solution (a) onto the adhesive,
wherein:
the resin solution (a) comprises the thermoplastic resin (A) and a solvent; and
a boiling point of the solvent in the adhesive is equal to or more than a boiling point of the solvent of the resin solution (a).
